# FASCICULE DE BREVET EUROPEEN

(11) **EP 1 277 624 B1**
(45) Date de publication et mention de la délivrance du brevet: **12.05.2004**
(21) Numéro de dépôt: 02291759.5
(22) Date de dépôt: 11.07.2002
(51) Int. Cl.: B60R 21/13, B60N 2/42, B60N 2/48

(54) **Dispositif de protection perfectionné contre les chocs à appui-tête et arceau mobile, pour véhicule automobile**
Vorrichtung zum Schutz vor Stössen gegen eine Kopfstütze und verstellbarer Überrollbügel für Kraftfahrzeuge
Protection device against impacts to head rest and adjustable roll bar for automotive vehicles

(30) Priorité: 18.07.2001 FR 0109607
(43) Date de publication de la demande: 22.01.2003
(73) Titulaire: Peugeot Citroen Automobiles SA, 92200 Neuilly sur Seine (FR)
(72) Inventeur: Gremillet, Eric, 70200 La Vergenne (FR)
(74) Mandataire: Thinat, Michel

(56) Documents cités:
- EP-A- 0 850 808
- EP-A- 0 904 991
- EP-A- 0 919 440

## Description

La présente invention concerne de façon générale les dispositifs de protection contre les chocs utilisables dans les véhicules automobiles.

Plus précisément, l'invention concerne un dispositif de protection contre les chocs, utilisable dans un véhicule automobile, ce dispositif comprenant un arceau de sécurité et un appui-tête qui inclut lui-même deux tiges de maintien, un coussin lié aux tiges de maintien, un renfort, et une coque, l'arceau étant mobile en translation, par rapport au coussin, entre une position basse et une position haute, et présentant deux montants disposés symétriquement par rapport à un plan vertical médian de l'appui-tête; et le renfort présentant une face avant recouverte par le coussin et une face arrière recouverte par la coque, au moins dans la position basse de l'arceau.

Un dispositif de ce type est par exemple décrit dans le document de brevet EP 0850808. Le dispositif décrit dans ce document comprend un arceau en appui sur la carrosserie du véhicule, soit directement, soit par l'intermédiaire d'un caisson extérieur au siège. Par ailleurs, la partie supérieure de l'arceau est logée dans un évidement de l'appui-tête, situé dans la partie arrière de celui-ci. Cet évidement est fermé par un couvercle qui pivote quand l'arceau se déploie. Ce dispositif est très compact. De plus, la disposition du coussin et de son support par rapport à l'arceau est telle qu'en cas de chargement important de l'appui-tête (choc arrière par exemple), l'arceau joue le rôle d'appui additionnel pour l'appui-tête et la force du choc est bien transmise du coussin à l'arceau.

Ce dispositif antérieur représente un perfectionnement du dispositif décrit dans le le brevet EP 0 456 646. Ce dernier document décrit un arceau de sécurité intégré dans le dossier du véhicule, et dont la partie supérieure suit parfaitement le contour de l'appui-tête en position de repos. En cas de retournement du véhicule, les efforts supportés par l'arceau sont repris par la structure portante du dossier par rapport à la carrosserie du véhicule. Cette disposition conduit à des contraintes importantes pour la tenue mécanique des différents éléments du siège, tels que les rails de réglage, les moteurs et les articulations, et donc à des surcoûts.

Quel que soit l'agencement spécifique qu'ils prévoient pour permette à l'arceau de se déployer, ces deux dispositifs antérieurs apportent des solutions au problème que pose en cas de choc, la transmission des efforts que la tête d'un passager ou du conducteur du véhicule applique à l'appui-tête.

Dans ce contexte, l'invention a pour but, non pas simplement d'assurer la transmission de ces efforts, mais de façon plus générale, d'augmenter la sécurité du conducteur et de chaque passager.

A cette fin, le dispositif de l'invention, par ailleurs conforme à la définition générique qu'en donne le préambule ci-dessus, est essentiellement caractérisé en ce que le renfort présente des moyens d'amortissement en regard des montants de l'arceau.

En cas de choc, ces moyens d'amortissement se déforment élastiquement en coopération avec les montants de l'arceau pour absorber une partie de l'énergie du choc.

Dans un mode de réalisation possible de l'invention le renfort est essentiellement constitué d'une nappe d'un matériau souple, et les moyens d'amortissement comprennent des cavités formées dans cette nappe.

De préférence les tiges de maintien peuvent être respectivement enfilées dans deux tubes formés dans la nappe.

Le renfort peut par exemple être formé de plusieurs voiles présentant des épaisseurs de matière respectives sensiblement identiques.

Les tubes peuvent être avantageusement reliés l'un à l'autre par un voile unique du renfort.

Le renfort est de préférence constitué d'une matière plastique souple.

La coque peut avantageusement coiffer l'arceau, dont elle est solidaire.

Ce dispositif peut par exemple comprendre une liaison par laquelle le renfort et la coque sont guidés l'un sur l'autre en coulissement relatif.

Cette liaison peut de préférence comprendre au moins une rainure périphérique du renfort, s'ouvrant vers l'extérieur de l'appui-tête, et au moins un rebord de la coque, orienté vers l'intérieur de l'appui-tête et engagé dans la rainure.

D'autres caractéristiques et avantages de l'invention ressortiront clairement de la description qui en est faite ci-après, à titre indicatif et nullement limitatif, en référence aux dessins annexés, dans lesquels:
- la Figure 1 est une section verticale suivant le plan médian de l'appui-tête d'un dispositif conforme à l'invention,
- la Figure 2 est une section horizontale, suivant le plan II-II de la figure 1, d'un dispositif conforme à l'invention,
- la Figure 3 est une vue de côté d'un dispositif conforme à l'invention, avec l'arceau en position basse, et
- la Figure 4 est une vue de côté d'un dispositif conforme à l'invention, avec l'arceau en position haute.

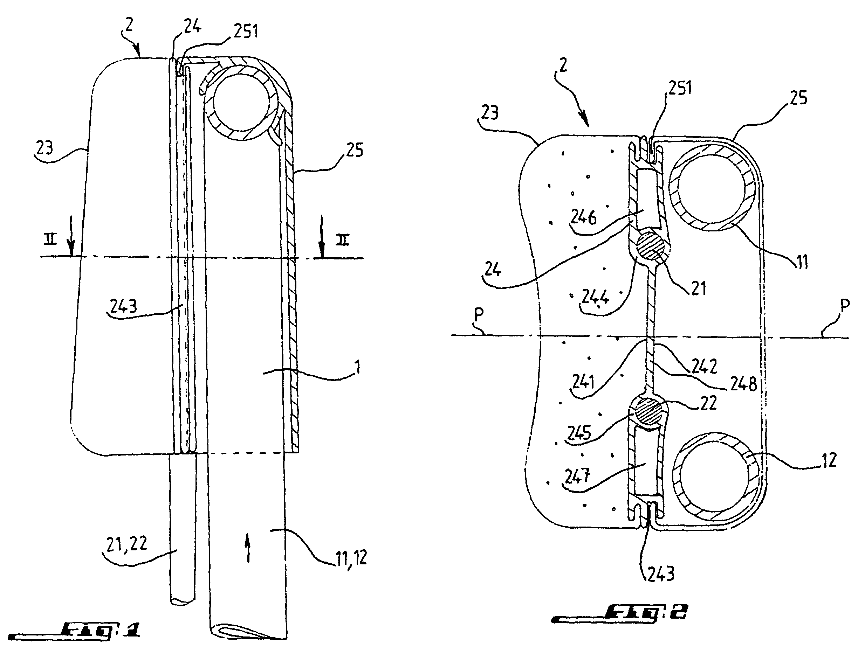

Comme illustré sur la figure 1, le dispositif comprend un arceau de sécurité 1 et un appui-tête 2.

La partie supérieure de l'arceau 1 a sensiblement la forme d'un U renversé et comprend deux montants sensiblement verticaux 11 et 12 reliés par un tube horizontal 13.

Les deux montants 11 et 12 sont disposés symétriquement par rapport à un plan vertical médian de l'appui-tête

L'appui-tête 2 comprend deux tiges de maintien 21 et 22 sensiblement verticales, un coussin 23 à l'avant de l'appui-tête suivant le sens de déplacement normal du véhicule, un renfort 24 et une coque 25 à l'arrière de l'appui-tête.

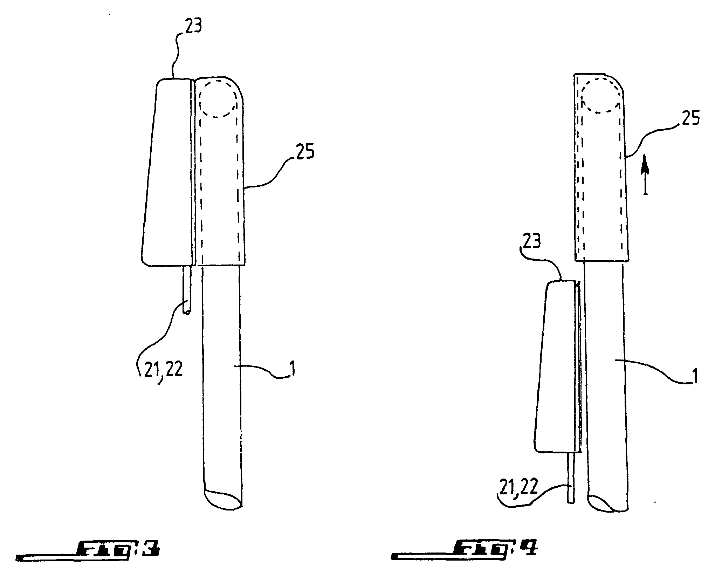

Comme illustré sur la figure 2, le renfort 24 comprend différents voiles présentant de préférence des épaisseurs sensiblement identiques. Le coussin 23 est fixé sur la face avant 241 du renfort et la coque 25 recouvre la face arrière 242 de ce même renfort. La face arrière 242 et la coque 25 forment donc un volume ouvert par le bas dans lequel vient se loger la partie supérieure de l'arceau 1.

Selon l'invention, le renfort 24 comprend des moyens d'amortissement, situés de part et d'autre du plan médian P de l'appui-tête, en regard des montants verticaux 11 et 12 de l'arceau 1.

Dans un mode de réalisation possible de l'invention, le renfort 24 est constitué essentiellement d'une nappe d'un matériau souple, et les moyens d'amortissement sont constitués respectivement des cavités verticales 246 et 247 formées dans cette nappe. Ces cavités 246 et 247 sont par exemple de section sensiblement rectangulaire, mais prennent aussi d'autres formes.

En cas de chargement important de l'appui-tête (choc arrière par exemple), les cavités 246 et 247 vont venir au contact des montants 11 et 12, et les différents voiles délimitant les cavités vont se déformer de façon élastique au contact des montants 11 et 12, absorbant ainsi une partie de l'énergie du choc.

Les voiles constituant le renfort 24 sont agencés de façon à présenter un voile central 248, et deux tubes verticaux 244 et 245 situés de part et d'autre du plan médian de l'appui-tête, et à former les deux cavités 246 et 247 situées de part et d'autre du plan médian de l'appui-tête, et une rainure 243 sur chacun des côtés extérieurs verticaux, ces rainures étant ouvertes sur l'extérieur de l'appui-tête.

Les tiges de maintien 21 et 22 viennent s'enfiler dans les tubes 244 et 245.

Le voile central 248 relie les deux tubes verticaux 244 et 245, qui sont donc disposés chacun d'un côté de ce voile. Les cavités 246 et 247 sont disposées entre les tubes verticaux 244 et 245 et la rainure 243.

Le renfort 24 est constitué de préférence d'une matière plastique souple.

La coque 25 est fixée à l'arceau 1 qu'elle coiffe par un clip ou par tout autre moyen de liaison adapté, et est solidaire de l'arceau 1 en translation dans la direction verticale. Elle comprend un rebord vertical 251 rentrant vers l'intérieur de l'appui-tête, qui est engagé dans la rainure 243. Le rebord 251 est libre en translation dans la rainure 243.

L'arceau 1 est normalement dans sa position basse, mais peut se déployer automatiquement en cas de retournement du véhicule jusqu'à une position haute, comme illustré sur les figures 3 et 4. L'arceau 1 entraîne alors avec lui la coque 25, qui coulisse dans le sens vertical par rapport au renfort 24. La coque 25 est guidée dans ce mouvement par la liaison glissière du rebord 251 dans la rainure 243.

La position verticale du coussin 23 est réglable pour s'adapter à la taille du conducteur ou des passagers, en déplaçant dans le plan vertical l'ensemble solidaire formé par le coussin 23, le renfort 24 et les tiges de maintien 21 et 22. Cet ensemble solidaire coulisse par rapport à l'arceau 1 et à la coque 25, qui restent fixes.

## Revendications

1. Dispositif de protection contre les chocs, utilisable dans un véhicule automobile, ce dispositif comprenant un arceau de sécurité (1) et un appui-tête (2) qui inclut lui-même deux tiges de maintien (21, 22), un coussin (23) lié aux tiges de maintien (21, 22), un renfort (24), et une coque (25), l'arceau (1) étant mobile en translation, par rapport au coussin (23), entre une position basse et une position haute, et présentant deux montants (11, 12) disposés symétriquement par rapport à un plan vertical médian de l'appui-tête (2); et le renfort (24) présentant une face avant (241) recouverte par le coussin (23) et une face arrière (242) recouverte par la coque (25), au moins dans la position basse de l'arceau (1), **caractérisé en ce que** le renfort (24) présente des moyens d'amortissement (246, 247) disposés en regard des montants (11, 12) de l'arceau (1).

2. Dispositif suivant la revendication 1, **caractérisé en ce que** le renfort (24) est essentiellement constitué d'une nappe d'un matériau souple, et **en ce que** les moyens d'amortissement (246, 247) sont constitués des cavités verticales formées dans cette nappe.

3. Dispositif suivant la revendication 2, **caractérisé en ce que** les tiges de maintien (21, 22) sont respectivement enfilées dans deux tubes (244, 245) formés dans la nappe.

4. Dispositif suivant l'une quelconque des revendications précédentes, **caractérisé en ce que** le renfort (24) est formé de plusieurs voiles présentant des épaisseurs de matière respectives sensiblement identiques.

5. Dispositif suivant la revendication 2 ou 3, **caractérisé en ce que** les cavités verticales des moyens d'amortissement (246, 247) sont de sections rectangulaires, le grand côté des rectangles étant face aux montants (11) et (12) de l'arceau (1), les petits côtés des rectangles étant parallèles au plan médian de l'appui-tête (2).

6. Dispositif suivant les revendications 3 et 4, **caractérisé en ce que** les tubes (244, 245) sont reliés l'un à l'autre par un voile unique (248) du renfort (24).

7. Dispositif suivant l'une quelconque des revendications précédentes, **caractérisé en ce que** le renfort (24) est constitué d'une matière plastique souple.

8. Dispositif suivant l'une quelconque des revendications précédentes, **caractérisé en ce que** la coque (25) coiffe l'arceau (1) dont elle est solidaire.

9. Dispositif suivant l'une quelconque des revendications précédentes, **caractérisé en ce que** ce dispositif comprend une liaison par laquelle le renfort (24) et la coque (25) sont guidés l'un sur l'autre en coulissement relatif.

10. Dispositif suivant la revendication 9, **caractérisé en ce que** la liaison comprend au moins une rainure périphérique (243) du renfort (24), s'ouvrant vers l'extérieur de l'appui-tête, et au moins un rebord (251) de la coque (25), orienté vers l'intérieur de l'appui-tête (2) et engagé dans la rainure (243).

## Patentansprüche

1. Vorrichtung zum Schutz vor Stößen zur Verwendung in einem Kraftfahrzeug, wobei diese Vorrichtung einen Überrollbügel (1) und eine Kopfstütze (2) enthält, die ihrerseits zwei Haltestäbe (21, 22), eine mit den Haltestäben (21, 22) verbundene Polsterung (23), eine Verstärkung (24) und eine Schale (25) aufweist, wobei der Bügel (1) bezüglich der Polsterung (23) zwischen einer unteren Stellung und einer oberen Stellung translatorisch verschiebbar ist und zwei Stützen (11, 12) aufweist, die symmetrisch zu einer senkrechten Mittelebene der Kopfstütze (2) angeordnet sind, und wobei die Verstärkung (24) eine von der Polsterung (23) verdeckte Vorderseite (241) und eine von der Schale (25) verdeckte Hinterseite (242) enthält, und zwar zumindest in der unteren Stellung des Bügels (1), **dadurch gekennzeichnet, dass** die Verstärkung (24) Dämpfungsmittel (246, 247) aufweist, die den Stützen (11, 12) des Bügels (1) gegenüberliegend angeordnet sind.

2. Vorrichtung nach Anspruch 1, **dadurch gekennzeichnet, dass** die Verstärkung (24) im wesentlichen aus einer Einlage aus nachgiebigem Material besteht und dass die Dämpfungsmittel (246, 247) aus senkrechten Hohlräumen bestehen, die in dieser Einlage gebildet sind.

3. Vorrichtung nach Anspruch 2, **dadurch gekennzeichnet, dass** die Haltestäbe (21, 22) in zwei jeweilige Rohre (244, 245) eingeschoben sind, die in der Einlage ausgebildet sind.

4. Vorrichtung nach einem der vorangehenden Ansprüche, **dadurch gekennzeichnet, dass** die Verstärkung (24) aus mehreren Schichten gebildet ist, die jeweils im wesentlichen identische Materialstärken aufweisen.

5. Vorrichtung nach Anspruch 2 oder 3, **dadurch gekennzeichnet, dass** die senkrechten Hohlräume der Dämpfungsmittel (246, 247) im Querschnitt rechteckförmig sind, wobei die Langseiten der Rechtecke den Stützen (11) und (12) des Bügels (1) gegenüberliegen und die Schmalseiten der Rechtecke parallel zur Mittelebene der Kopfstütze (2) verlaufen.

6. Vorrichtung nach Anspruch 3 und 4, **dadurch gekennzeichnet, dass** die Rohre (244, 245) über eine einzige Schicht (248) der Verstärkung (24) miteinander verbunden sind.

7. Vorrichtung nach einem der vorangehenden Ansprüche, **dadurch gekennzeichnet, dass** die Verstärkung (24) aus einem nachgiebigen Kunststoffmaterial besteht.

8. Vorrichtung nach einem der vorangehenden Ansprüche, **dadurch gekennzeichnet, dass** die Schale (25) den Bügel (1) übergreift, mit dem sie fest verbunden ist.

9. Vorrichtung nach einem der vorangehenden Ansprüche, **dadurch gekennzeichnet, dass** die Vorrichtung eine Verbindung enthält, über welche die Verstärkung (24) und die Schale (25) in relativer Gleitbewegung aneinander geführt sind.

10. Vorrichtung nach Anspruch 9, **dadurch gekennzeichnet, dass** die Verbindung zumindest eine Umfangsnut (243) der Verstärkung (24) enthält, die sich nach außerhalb der Kopfstütze öffnet, sowie zumindest eine Randleiste (251) der Schale (25), die zum Inneren der Kopfstütze (2) gerichtet ist und in die Nut (243) eingreift.

## Claims

1. An impact protection device which can be used in an automobile vehicle, said device comprising a roll bar (1) and a head-rest (2), which itself includes two supporting rods (21, 22), a cushion (23) joined to the supporting rods (21, 22), a reinforcement (24), and a shell (25), the roll bar (1) being capable of executing translational movements, in relation to the cushion (23), between a lower position and an upper position and having two pillars (11, 12) which are symmetrically disposed with respect to a vertical mid-plane of the head-rest (2); the reinforcement (24) having a front face (241) covered by the cushion (23) and a rear face (242) covered by the shell (25), at least in the lower position of the roll bar (1), **characterised in that** the reinforcement (24) comprises damping means (246, 247) which are disposed facing the pillars (11, 12) of the roll bar (1).

2. A device according to claim 1, **characterised in that** the reinforcement (24) is essentially formed from a sheet of a flexible material, and that the damping means (246, 247) comprise vertical cavities formed in said sheet.

3. A device according to claim 2, **characterised in that** the supporting rods (21, 22) are threaded into two tubes (244, 245), respectively, which are formed in the sheet.

4. A device according to any one of the preceding claims, **characterised in that** the reinforcement (24) is formed from a plurality of webs which have respective thicknesses of material which are substantially identical.

5. A device according to claim 2 or 3, **characterised in that** the vertical cavities of the damping means (246, 247) have rectangular cross-sections, the long side of the rectangles facing the pillars (11) and (12) of the roll bar (1), and the short sides of the rectangles being parallel to the mid-plane of the head-rest (2).

6. A device according to claims 3 and 4, **characterised in that** the tubes (244, 245) are joined to each other by a single web (248) of the reinforcement (24).

7. A device according to any one of the preceding claims, **characterised in that** the reinforcement (24) is formed from a flexible plastic material.

8. A device according to any one of the preceding claims, **characterised in that** the shell (25) covers the roll bar (1) with which it is integral.

9. A device according to any one of the preceding claims, **characterised in that** said device comprises a connection by which the reinforcement (24) and the shell (25) are guided on one another with relative sliding.

10. A device according to claim 9, **characterised in that** the connection comprises at least one peripheral groove (243) in the reinforcement (24) which is open towards the outside of the head-rest, and comprises at least one flange (251) of the shell (25), which is oriented towards the interior of the head-rest (2) and which is fitted into the groove (243).
